# EUROPEAN PATENT APPLICATION

(11) **EP 0 638 966 A2**
(43) Date of publication of application: **15.02.1995**
(21) Application number: 94830382.1
(22) Date of filing: 26.07.1994
(51) Int. Cl.: H01R 21/00

(54) **Telephone line three-pole terminal jack**

(30) Priority: 11.08.1993 IT RM930548
(71) Applicant: CIRTE MANIFATTURIERA S.p.A., I-80133 Napoli (IT)
(72) Inventor: Michelotti, Guido, I-00143 Roma (IT)
(74) Representative: Fiammenghi-Domenighetti, Delfina

(57) **Abstract**

Telephone line three-pole terminal jack of conventional type but capable of including also a remote sectioning device such as to be connected to an additional section for supplementary services such as remote counter readout and wired radio.

## Description

The present invention relates to a telephone line three-pole terminal jack fitted in a box of the conventional type and comprising in addition to the three contacts of a three-pole telephone jack also thermal protection devices, a remote line sectioning device, and the terminals for the output signal.
In case of a phone service providing wired radio and/or remote counter readout or other services, the telephone line three-pole terminal jack is provided with a device comprising the terminals for the additional service and three contacts for a three-pole telephone plug.

At the present state of art the new standard telephone line terminal jack provided by the Italian Phone Service Company is formed of two separate sections: one section dedicated to the remote sectioning device, the protection components, and the terminals for the connection of additional services such as wired radio or remote counter readout, and a second section containing the three telephone contacts for a telephone plug and having the construction and the function of the conventional telephone line three-pole terminal jack.
The separation between the parts accessible to the Phone Service Company and the parts accessible to the user is assured at present by sealing a portion of the first section. Users can connect their equipment to the line downstream of such sealed section.
Such system has a number of problem both of technical and merely economical type. In fact it is known that the demand of additional telephone services (such as remote counter readout and wired radio) does not exceed 7-8% of the users so that most telephone sets have a telephone line three-pole terminal jack including devices which are not actually used. The useless presence of such devices means not only a waste regarding the cost and the available room but also assembling problems and above all a lower operation reliability.
To this end it should be appreciated that the installation of the remote sectioning device (included in the new standard terminal jack mentioned above) at the user, as specifically described in the Patents RM 91A 000642 and RM 92 A 000230, has the main purpose of actuating a sectioning of the line at the user so as to check the state of the line and to avoid the intervention of the technical staff on site.
According to this solution which actually solves the problem of automatically checking the state of the line without using technical staff at the user, the given solution with the present standard telephone line jack is somewhat disadvantageous as it requires, downstream of the remote sectioning device, a terminal strip which can be short-circuited in case the corresponding service is not activated.
The low reliability of such terminal strips is also due to the fact that they are accessible to the user for any illegal opening. In such case a spacialized staff is always needed for maintenance on site. Such configuration of the new standard telephone line jack having such terminal strip is even more disadvantageous and reduces the advantages of the use of the remote sectioning device to the minimum considering that less than 10% of the users ask for services such as remote counter readout and wired radio.

The present invention seeks to provide a telephone line three-pole terminal jack which reduces the overall dimension and increases the reliability and avoids the intervention of technical staff at the user, although the services offered by the present standard telephone line terminal jack remain unchanged.

A further object of the present invention is to provide a new standard telephone line terminal jack which has significantly reduced construction and assembling times.

Still another object of the present invention is to provide a new standard telephone line terminal jack which can be sold at a competitive price.

These and other objects which will be more readily apparent thereafter are achieved by a telephone line three-pole terminal jack including a remote line sectioning device in a box having the same dimension as the usual standard three-pole telephone jack, the terminals for the connection of the output wires, two thermal protection devices, and three terminals for a three-pole telephone plug, and only in case of presence of wired radio or remote counter readout or other services there is provided a device including the terminals for the service to be used and three terminals for a three-pole telephone plug.

In order to better explain the invention and without limiting its general field of application a preferred embodiment of the device according to the invention is now described with reference to the accompanying drawings, in which:
Fig. 1 show a simplified electrical diagram of the new standard telephone line terminal jack;
Fig. 2a is a top view of the interior of a new standard telephone line terminal jack according to the invention;
Fig. 2b is a section view of the device of Fig. 2a;
Fig. 2c is a top view of the component-side of the printed board;
Fig. 3 is an electrical diagram of the new standard telephone line terminal jack according to the invention and the additional circuit relative to the connection of the remote counter readout and/or the wired radio.

It should be noted that in the figures like parts have the same references.

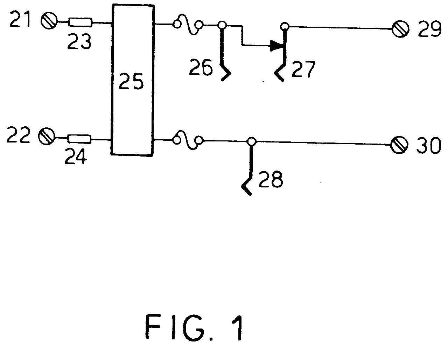

In Fig. 1 a basic diagram formed of a telephone plug within a classic box is shown, in which the input signal is fed to terminals 21 and 22 and the output signal is taken at terminals 29 and 30. Components 23 and 24 are thermal-protection resistors, and the remote sectioning device 25 according to the basic principle of the present invention is placed into the box of the conventional type together with the three terminals 26, 27, 28 for a three-pole telephone plug.

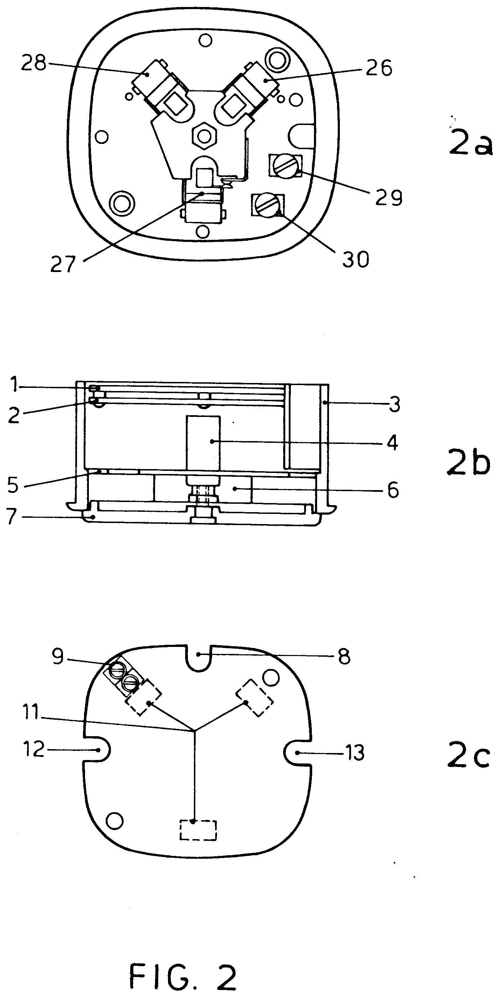

The installation of a remote sectioning device 25 in a box of the conventional type is shown in Figs. 2a, 2b and 2c. Particularly Fig. 2b relates to the body of jack 3 which is the traditional hitherto used body having an area 4 for the springs of the jack, a printed board 5 for said springs supported on the other hand by the spring-holder block 6, and a front cover 7 closing the device containing the known components mentioned above.
The novelty as for the components is introduced by the printed board 2 relative to the remote sectioning device 25 and the base 1 protecting and supporting printed board 2.

Such printed board 2 receives the components of known technology forming the remote sectioning device.
Figs. 2a and 2c show the arrangement of the terminals and cables and the channels for their laying. In particular it should be noted that printed board 2 of remote sectioning device 25 has notch 8 for the telephone cable of the Phone Service Company, notch 12 for any cable of the remote counter readout and wired radio, and notch 13 for the user's cables. Terminals 9 for the cables of the Phone Service Company as well as the dimensioned areas for the springs of jack 11 are also provided on such printed board.

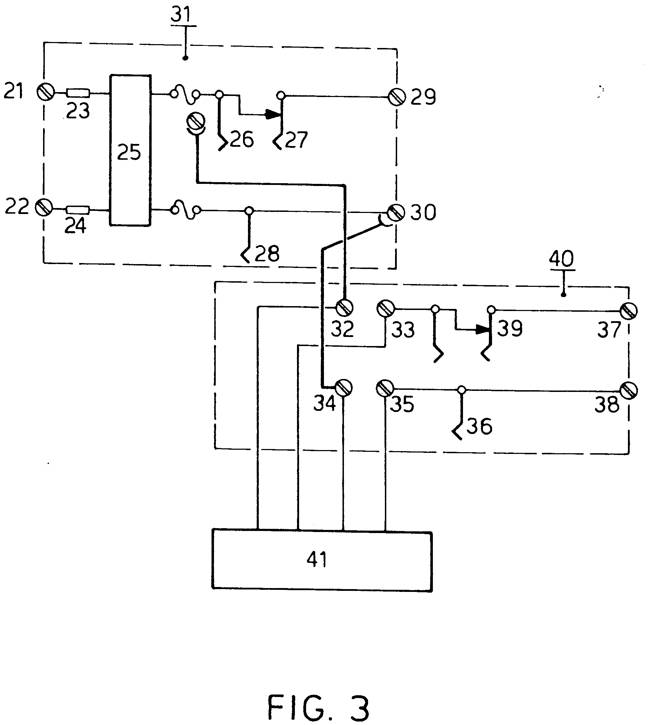

In addition to the diagram of Fig. 1 designated by block 31 Fig. 3 shows the additional part 40 for the arrangement of terminals 32, 33, 34, 35 and the connection of services such as remote counter readout and/or wired radio. Block 40 includes the three terminals for a tree-pole telephone plug 33, 39 and 36 connected to the output 37 and 38, while at the same time the terminals for three-pole plug 26, 27 and 29 of basic block 31 are disconnected. Therefore, if it is desired to take a signal from such device, for example in order to connect further receiving sets, the user will establish a connection to terminals 37 and 38 instead of terminals 29 and 30.

The reliability of the terminal device of such configuration is very high because the function of the telephone line is always assured even if there are problems in the additional services (remote counter readout and/or wired radio).
Furthermore, the basic embodiment of the device is of practical use and can be embedded and protected into a wall.
The plain separation between the section accessible to the user and the section accessible to the Phone Service Company is obtained by means of a seal which is placed in the rear part of the new standard telephone line terminal jack 31, thus allowing the user to be connected to the line in any case for the specific service.

## Claims

1. Telephone line three-pole terminal jack, wherein it includes two sections having separate function and construction, one section (31) which would be sufficient for the connection to the telephone line including a remote sectioning device (25), the protection devices (23, 24), the output terminal (29, 30) to the user, and the three terminals (26, 27, 28) for the three-pole telephone plug, the second section (40), necessary only in case of the presence of wired radio and/or remote counter readout, being connectable to the first section and including the terminals (32, 33, 34, 35) for the services to be connected, the three terminals (33, 36, 39) for the three-pole telephone plug, and the output terminals (37, 38).

2. Telephone line three-pole terminal jack according to claim 1, characterized in that a printed board (2) including the remote sectioning device (25) and a base for protecting and supporting the printed board (2) are arranged in the rear part of jack (3) forming the box of the section of the standard telephone line terminal jack (31).

3. Telephone line three-pole terminal jack according to claim 1, characterized in that the addition of the section (40) of any supplementary services is carried out by a simple connection of the input terminals (32, 34) of such section (40) to the terminals downstream of the remote sectioning device (25) with the result of the connection of the terminals (33, 36, 39) for the three-pole telephone plug of block (40) and disconnection of the corresponding terminals (26, 27, 28) of block (31).
